# EUROPÄISCHE PATENTSCHRIFT

(11) **EP 1 105 721 B1**
(45) Veröffentlichungstag und Bekanntmachung des Hinweises auf die Patenterteilung: **28.02.2007**
(21) Anmeldenummer: 00949110.1
(22) Anmeldetag: 14.06.2000
(51) Int. Cl.: G01N 27/90

(54) **WALZSTRASSE**
ROLLING MILL
TRAIN DE LAMINAGE

(30) Priorität: 15.06.1999 DE 19927061
(43) Veröffentlichungstag der Anmeldung: 13.06.2001
(73) Patentinhaber: Georgsmarienhütte GmbH, 49124 Georgsmarienhütte (DE)
(72) Erfinder: SCHARLEMANN, Horst DI, // (DE)
(74) Vertreter: Röther, Peter
(86) Internationale Anmeldenummer: PCT/DE2000/001971
(87) Internationale Veröffentlichungsnummer: WO 2000/077513

(56) Entgegenhaltungen:
- GB-A- 2 014 317
- US-A- 4 024 470
- US-A- 4 461 995

## Beschreibung

Die Erfindung betrifft eine Walzstrasse bestehend aus mindestens zwei aufeinanderfolgenden Walzgerüsten, in der eine Vorrichtung zur zerstörungsfreien Prüfung von insbesondere heißen stabförmigem Walzmaterial oberhalb des Curie-Punktes während des Walzprozesses angeordnet ist, die aus einem um das durchlaufende Walzmaterial rotierenden, mit einem von einem Walzenkühlsystem gelieferten Kühlmittel beaufschlagbaren Prüfspulensystem mit mindestens zwei Prüfspulen besteht.

Derartige Vorrichtungen sind an sich bekannt, so z.B. aus der GB-A-2 014 317. Hier ist (insbesondere in Fig. 2) ein rotierendes Prüfspulensystem dargestellt, welches auf Schienen verfahrbar an den Prüfort, welcher durch den Schienenverlauf begrenzt ist, herangefahren werden kann. Die vorbekannte Vorrichtung fällt in erster Linie durch ihre lange Bauart auf, was neben dem Nachteil, daß diese Vorrichtung nicht an beliebigen Orten eingesetzt werden kann, den weiteren Nachteil aufweist, daß durch die Nichtgewährleistung der exakten Geradführung des zu prüfenden Materials zum einen Meßfehler auftreten können, zum anderen aber auch die Vorrichtung beschädigt oder gar zerstört werden kann.

Bedingt durch die Länge der Vorrichtung ist auch die Wasserführung zum Kühlen sowohl der Spulen als auch der Rotationslager kompliziert und aufwendig.

Der Erfindung liegt daher die Aufgabe zugrunde, eine Vorrichtung der eingangs genannten Art so auszuführen, daß sie kleinbauend an beliebigen Orten in der Walzstraße installiert werden kann, an denen naturgemäß eine exakte Geradführung des Walzgutes gewährleistet ist.

Die Erfindung löst diese Aufgabe gemäß dem Anspruch 1, insbesondere durch die Anordnung der aus einem rotierenden Teil und einem stationären Teil bestehenden Vorrichtung unmittelbar hinter dem Walzgutaustritt aus einem der Walzgerüste an dem diesen zugeordneten Walzenkühlsystem und dadurch, dass die Kühlmittelzufuhr für das Prüfspulensystem in etwa in der Befestigungsebene der Vorrichtung am Walzgerüst in das rotierende Teil erfolgt, in welchem ein bis zu seiner Stirnseite zwischen dem Walzmaterial und einem Rotationslager des rotierenden Teils gewindeartig umlaufender Kühlmittelkanal vorgesehen ist, von dem einzelne Leitungen radial zu den jeweiligen Prüfspulen führen, die in ihre definierte Meßposition bei Vorliegen bestimmter Parameter (Fliehkraft, Druck) verschwenkbar sind.

Diese Anordnung bietet sich insbesondere bei sogenannten Mehrwalzenwalzgerüsten an, bei denen beispielsweise drei um jeweils 120° zueinander versetzt angeordnete Walzen bzw. Rollen vorgesehen sind (sogenannter Kocksblock) und in einem derartigen Block einem ersten Walzentripel in etwa 35 cm Entfernung ein weiteres Walzentripel folgt. Die erfindungsgemäße Vorrichtung ist so ausgebildet, daß sie in diesen relativ engen Bereich zwischen den Walzentripeln paßt. Durch die Tatsache, daß die beiden Walzentripel so eng aufeinander folgen, ist eine exakte Geradführung des Walzgutes gewährleistet, so daß nach der Montage der erfindungsgemäßen Vorrichtung und der ersten Justage keine weiteren Einstellungsarbeiten mehr erforderlich sind.

Die Anordnung der erfindungsgemäßen Vorrichtung an der im kennzeichnenden Teil des Anspruchs 1 vorgesehenen Stelle (Walzenkühlsystem) hat darüber hinaus den weiteren Vorteil, daß hier das für die Kühlung der Prüfspulen erforderliche Kühlmedium direkt zur Verfügung steht und dieses Kühlmittel auch direkt hier im Bereich der Befestigung der Vorrichtung in den rotierenden Teil der Vorrichtung eingeleitet werden kann, von wo es durch den gewindeartig umlaufenden Kanal und über die die vom Kanal radial abgehenden Leitungen zu den einzelnen Prüfspulen geführt werden kann.

Der gewindeartige Kanal wird dadurch hergestellt, daß in einen zum rotierenden Teil der Vorrichtung gehörenden Zylinder in dessen Oberfläche eine gewindeartige Nut eingeschnitten wird, welche durch einen zweiten Zylinder, der über den ersten geschoben wird, abgedeckt wird.

Durch den gewindeartigen Verlauf des Kühlmittelkanals ergibt sich eine große wärmeabsorbierende Oberfläche, die sich zwischen Walzgut, dem Rotationslager und den einerseits im rotierenden Teil andererseits im stationären Teil der Vorrichtung befindlichen Signalübertrager, welche mit den Prüfspulen verbunden sind, befindet.

Gerade bei den oben beschriebenen Dreiwalzen-Walzgerüsten bietet sich die Anordnung der erfindungsgemäßen Vorrichtung am Walzenkühlsystem an, da dieses Walzenkühlsystem hier aus einem den Walzgutaustritt ringförmig umgebenden Kanal besteht, von dem zu den Oberflächen der Walzen im Walzgerüst führende Düsenrohre radial abgehen. An dieses den ringförmigen Kanal umgebende Gehäuse wird die erfindungsgemäße Vorrichtung mit ihrem stationären Teil angeflanscht.

Eine besonders bevorzugte Ausführungsform der Prüfspulen in der erfindungsgemäßen Vorrichtung ist durch den Anspruch 3 gegeben. Die Prüfspulen sind hierbei jeweils auf einem in etwa L-förmigen Träger angeordnet, und zwar am Ende des längeren L-Schenkels, und der Träger ist um eine Achse schwenkbar, die im Bereich des Schnittpunktes der Schenkel verläuft. Die Träger bilden somit Winkelhebel.

Durch diese Ausbildung der Träger in Form von Winkelhebeln ergibt sich eine punktsymmetrische Anordnung um die Vorrichtungsachse. Der wesentliche Vorteil dieser Ausgestaltung ist jedoch in der Verschwenkbarkeit der Träger zu sehen, durch welche der Abstand der einzelnen Prüfspulen vom zu prüfenden Walzgut verändert werden kann.

In Zusammenhang mit der Verschwenkbarkeit der Prüfspulen-Träger ergibt sich das wesentliche Erfindungsmerkmal, welches durch die Ansprüche 4 und 5 gegeben ist, daß nämlich die definierte Meßposition der Prüfspulen automatisch erst dann eingenommen wird, wenn bestimmte Parameter gegeben sind.

Gemäß den Merkmalen des Anspruchs 4 greift an einem der L-Schenkel eine Feder an, die die Prüfspule bis zur Überschreitung einer bestimmten Rotationsfrequenz in einer vom Walzgut entfernten Stellung hält, wonach die Prüfspule infolge erhöhter Fliehkraft in die Meßposition gelangt.

Eine derartige Feder greift beispielsweise am kürzeren L-Schenkel an, welcher über ein Gegengewicht verfügt, welches ihn schwerer macht als den längeren L-Schenkel. Die Feder sorgt dafür, daß der längere L-Schenkel mit daran angeordneter Prüfspule so lange aus der Meßposition herausgeschwenkt bleibt, bis eine ausreichende Drehzahl des Prüfspulensystems erreicht ist. Diese wird erst erreicht, wenn der Anfang des zu messenden Walzguts (der naturgemäß mit vielen Verunreinigungen und Fehlern versehen ist und hinterher abgeschnitten wird, und der auch nicht die zur Messung erforderliche absolute Gradheit aufweist) den Meßort passiert hat. Dann erst ist die Rotationsfrequenz des Prüfspulensystems so hoch, daß die Kraft der Feder überwunden wird und der kürzere Schenkel infolge der Fliehkraft nach außen getrieben wird, wodurch die Prüfspule in die Meßposition gelangt.

Eine Alternative hierzu schlägt der Anspruch 5. Hier wird zwischen der Kühlmittelzuführung zu mindestens einer Prüfspule und dem kürzeren L-Schenkel eines dieser Prüfspule gegenüberliegenden Prüfspulenträgers ein Druckmittelzylinder angeordnet, dessen Kolben vom Kühlmittel über eine "By-pass-Leitung" beaufschlagt mittels seiner Kolbenstange auf den kürzeren L-Schenkel wirkt, sobald der Kühlmitteldruck einen bestimmten Wert überschritten hat, und hierdurch die Prüfspule aus einer vom Walzgut entfernten Stellung in die Meßposition drückt. Auch hierbei kann beim Meßvorgang der Anfang des zu messenen Walzgutes ausgespart werden, indem erst nach Durchgang desselben der Kühlmitteldruck auf das erforderliche Maß hochgesetzt wird, daß der kleine Druckmittelzylinder die Prüfspule in die Meßposition drücken kann.

Auch hierbei kann die abgehobene Stellung durch Federkraft bewirkt werden, aber auch durch Fliehkraft.

Obwohl es denkbar ist, daß jede Prüfspule bzw. jeder Prüfspulenträger mit einer Vorrichtung gemäß Anspruch 4 bzw. Anspruch 5 ausgestattet sein kann, ist gemäß Anspruch 6 bevorzugt vorgesehen, daß die Verschwenkbewegungen der Prüfspulenträger miteinander synchronisiert sind. Die Synchronisation erfolgt mittels dem Fachmann bekannter Methoden (beispielsweise Lenkergetriebe, Zahnradgetriebe etc.).

Die Erfindung wird im folgenden anhand von Zeichnungen dargestellt und näher erläutert.

Es zeigen:
- Fig. 1:: rotierendes Prüfspulensystem im Querschnitt,
- Fig. 2:: rotierendes Prüfspulensystem gemäß Fig. 1 in Vorderansicht,
- Fig. 3:: Beispiel eines Prüfspulensystems.

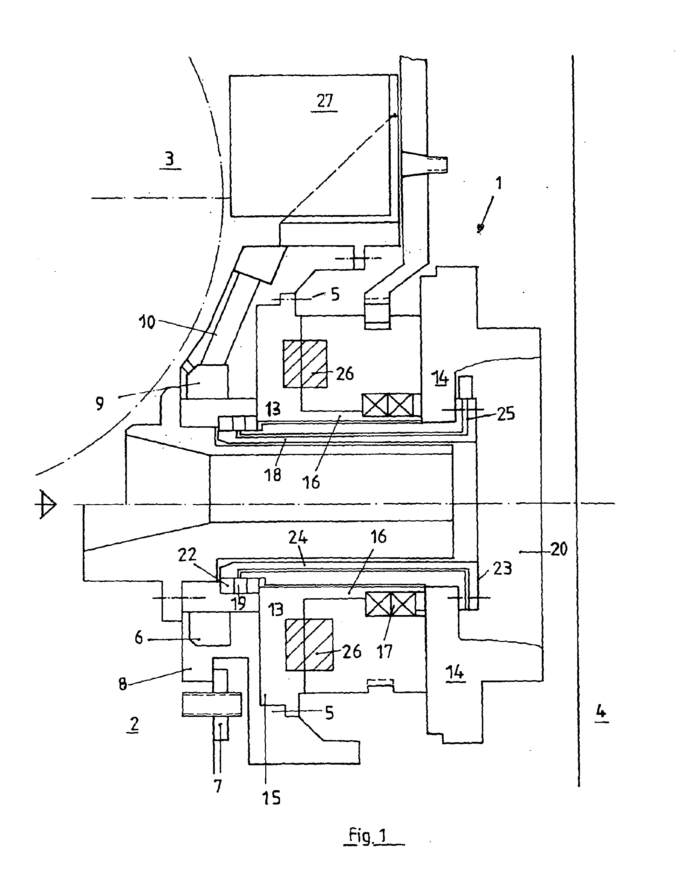

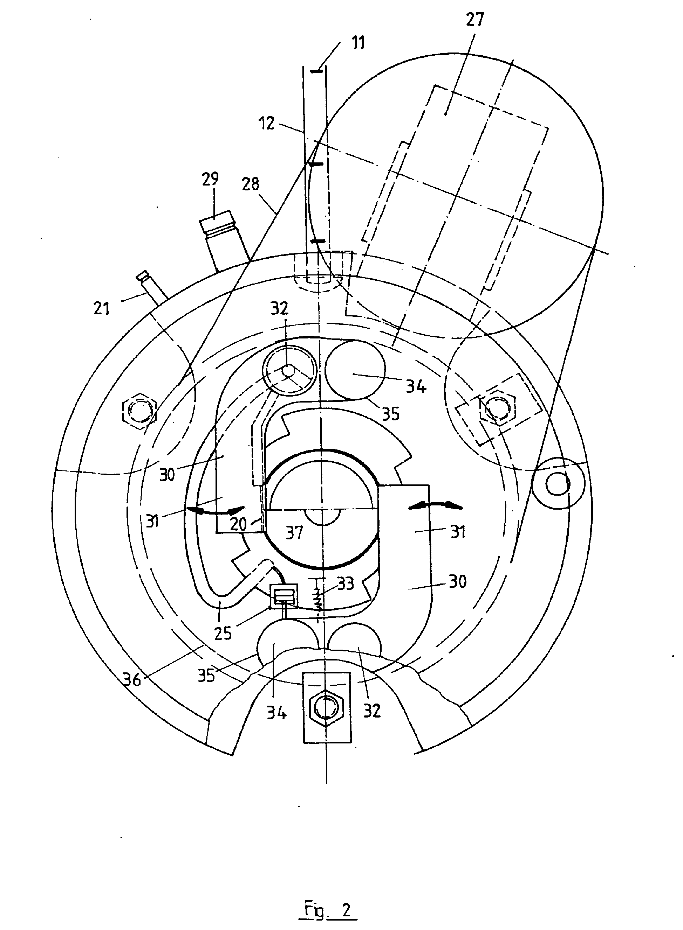

In der Fig. 1 ist im Schnitt eine erfindungsgemäße Vorrichtung dargestellt und allgemein mit dem Bezugszeichen 1 versehen. Befestigt ist diese Vorrichtung 1 an einem Walzgerüst 2, von dem eine Walze 3 strichpunktiert angedeutet ist. Mit dem Bezugszeichen 4 ist ein folgendes Walzgerüst bezeichnet, welches jedoch lediglich angedeutet ist. Die Vorrichtung 1 ist mittels lediglich angedeuteter Schraubenbolzen 5 an dem dem Walzgerüst zugeordneten Walzenkühlsystem 6 befestigt, welches seinerseits mit Hilfe von Befestigungsmitteln in der Befestigungsebene 7 am Walzgerüst selbst befestigt ist. Das Walzenkühlsystem 6 besteht im wesentlichen aus einem Ringflansch 8, der als Gehäuse für einen ringförmigen Kühlwasserkanal 9 dient, von dem radial Kühlmittelkanäle 10 abgehen, die, wie aus Fig. 2 ersichtlich, durch mit Düsenöffnungen 11 versehenen Rohren 12 gebildet sind, die auf die Oberflächen der zu kühlenden Walzen 3 gerichtet sind.

Man nennt ein derartiges Walzenkühlsystem auch Hirschgeweih, da gerade bei sogenannten Kocksblocks, bei denen drei Walzen jeweils um 120° zueinander versetzt den Walzspalt begrenzen, drei derartige Düsenrohre von dem Ringflansch abgehen und ein Stück weit um den jeweiligen Walzenumfang herumgebogen sind. Die erfindungsgemäße Vorrichtung besteht im wesentlichen aus einem stationären Teil und einem rotierenden Teil 14. Das stationäre Teil 13 besteht im wesentlichen aus einem an das Walzenkühlsystem 6 angeschraubten Ringflansch 15 und einem von diesem in axialer Richtung vorstehenden zylindrischen Teil 16, auf dem im vorliegenden Beispiel zwei nebeneinander angeordnete Rotationslager 17 angeordnet sind. Der Rotationsteil 14 der Vorrichtung besteht aus einem zwischen dem Walzgut und dem zylindrischen Teil 16 des stationären Teils 13 der Vorrichtung 1 hindurchgeführten zylindrischen Teil 18, der entgegen der Walzrichtung R über den stationären Teil 13 in den Bereich des Ringflansches 8 hineinreicht. An dieser Stelle befindet sich der Einlaß 19 für das Kühlmittel für die in der Fig. 1 lediglich angedeuteten Prüfspulen 20. Der Anschluß 21 für diesen Kühlmitteleinlaß ist in der Fig. 2 detaillierter dargestellt. Zur Abdichtung ist zwischen dem rotierenden Teil der Vorrichtung 1 und dem Ringflansch 8 des Walzenkühlsystems 6 ein Simmerring 22 angeordnet. Vom Kühlmitteleinlaß 19 verläuft bis zur Stirnseite 23 des rotierenden Teils der Vorrichtung 1 ein Kühlmittelkanal, der als gewindeartig umlaufender Kanal 24 ausgebildet ist. Der gewindeartig umlaufende Kühlmittelkanal 24 geht an der Stirnseite 23 der Vorrichtung 1 in einzelne Kühlmittelleitungen 25 über, deren weiterer Verlauf besser aus der Fig. 2 zu ersehen ist.

Die von den Prüfspulen 20 erzeugten Signale werden über induktive Elemente 26 vom rotierenden Teil der Vorrichtung 1 auf das stationäre Teil der Vorrichtung 1 übertragen und von dort aus zur Auswertung weitergeleitet.

Die Rotationsbewegung des rotierenden Teils der Vorrichtung 1 wird mittels eines geeigneten Antriebs z.B. mittels eines Hydraulikmotors 27 bewerkstelligt, dessen Drehbewegung über einen Zahnriemen 28 auf den rotierenden Teil der Vorrichtung 1 übertragen wird.

In der Fig. 2 ist die erfindungsgemäße Vorrichtung in Vorderansicht dargestellt. Gleiche Teile sind wie in Fig. 1 mit den gleichen Bezugszeichen versehen. Mit dem Bezugszeichen 29 ist hier noch der Anschluß für die Walzenkühlung bezeichnet.

Wie sich aus dieser Figur ergibt, sind die Prüfspulen 20 auf L-förmigen Trägern 30 angeordnet, die die Form eines Winkelhebels aufweisen. Die Prüfspulen 20 befinden sich am Ende des längeren Schenkels 31. Im vorliegenden Beispiel sind zwei Prüfspulenträger 30 punktsymmetrisch zueinander angeordnet. Beide Prüfspulenträger 30 weisen eine Drehachse 32 auf, in deren Bereich die Kühlmittelleitung 25 in den Prüfspulenträger 30 übergeht.

In der Fig. 2 ist der Meßzustand dargestellt, d.h. in diesem Zustand liegen die Prüfspulen 20 in der Meßposition am zu prüfenden Walzgut an bzw. in einer geringen Entfernung von 1 bis 2 mm davon.

Um die Prüfspulen vor Beschädigung zu schützen und um sicherzustellen, daß mit dem Prüfvorgang erst begonnen wird, wenn auch Material zwischen den Prüfspulen hindurchläuft, welches meßrelevant ist, sind die Prüfspulen zunächst vom Walzgut abgehoben. Das geschieht beispielsweise mittels einer Zugfeder 33, die an dem kürzeren L-Schenkel 34 angreift. Zum Messen muß das Rotationssystem eine bestimmte Rotationsfrequenz aufweisen. Diese Frequenz ist so hoch, daß die auf den mit einem Gegengewicht 35 versehenen L-Schenkel 34 ausgeübte Fliehkraft größer wird als die Kraft der Feder 33, wodurch sich der längere L-Schenkel 31 mit der Prüfspule 20 in die Meßposition begibt.

In der gleichen Zeichnung ist eine Alternative hierzu dargestellt. Sie besteht darin, daß zwischen einer der Kühlmittelleitungen 25 und dem kürzeren L-Schenkel 34 eines Prüfspulenträgers 30, der dem Prüfspulenträger 30, dem diese Kühlmittelleitung 25 zugeordnet ist, gegenüberliegt, ein kleiner Druckmittelzylinder 36 angeordnet ist. Der Zylinder ist über eine "By-pass-Leitung" 37 mit der Kühlmittelleitung 25 verbunden.

Hierbei beginnt der Meßvorgang erst, wenn in der Kühlmittelleitung 25 ein ausreichender Wasserdruck herrscht, der so groß ist, daß das in den Zylinder 36 eingeleitete Kühlwasser den Kolben und damit die Kolbenstange des Druckmittelszylinders 36 nach unten gegen den kürzeren Schenkel 34 des Trägers 30 drückt, wodurch sich ebenfalls der längere L-Schenkel 31 mit der Prüfspule 20 in die Meßposition begibt. Nicht dargestellte Synchronisationselemente gewährleisten die synchrone Verschwenkung aller beteiligten Prüfspulenträger 30.

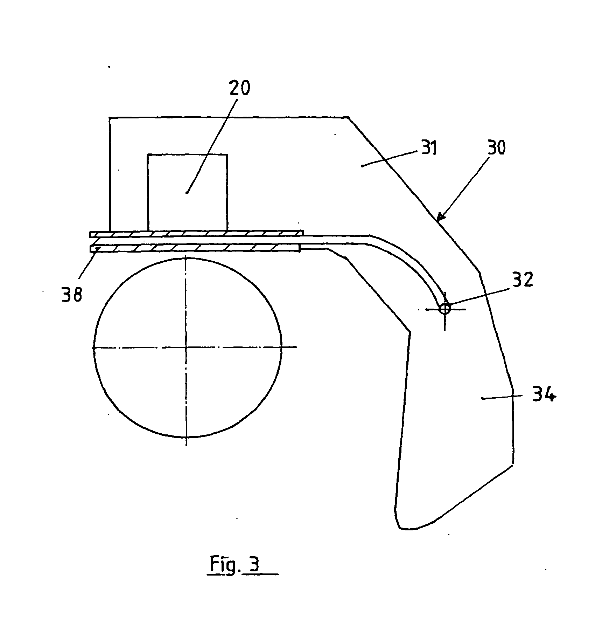

In der Fig. 3 schließlich ist beispielhaft dargestellt, wie die Kühlmittelzufuhr zu den einzelnen Prüfspulen 20 erfolgt. Im vorliegenden Fall ist auf dem längeren L-Schenkel 31 des Prüfspulenträgers 30 vor der Prüfspule 20 ein doppelwandiges Gehäuse aus einem keramischen Material angeordnet, wobei das an der Prüfspule 20 vorbeiströmende Kühlwasser an der äußeren Stirnseite des Gehäuses 38 austritt.

## Patentansprüche

1. Walzstrasse bestehend aus mindestens zwei aufeinanderfolgenden Walzgerüsten (2, 4), in der eine Vorrichtung (1) zur zustörungsfreien Prüfung von insbesondere heißem stabförmigem Walzmaterial oberhalb des Curie-Punktes während des Walzprozesses angeordnet ist, die aus einem um das durchlaufende Walzmaterial rotierenden, mit einem von einem Walzenkühlsystem (6) gelieferten Kühlmittel beaufschlagbaren Prüfspulensystem mit mindestens zwei Prüfspulen (20) besteht, **gekennzeichnet durch** die Anordnung der aus einem rotierenden Teil (14) und einem stationären Teil(13) bestehenden Vorrichtung (1) unmittelbar hinter dem Walzgutaustritt aus einem der Walzgerüste (2) an dem diesen zugeordneten Walzenkühlsystem (6) und **dadurch**, dass die Kühlmittelzufuhr für das Prüfspulensystem in etwa in der Befestigungsebene (7) der Vorrichtung (1) am Walzgerüst (2) in das rotierende Teil (14) erfolgt, in welchem ein bis zu seiner Stirnseite (23) zwischen dem Walzmaterial und einem Rotationslager (17) des rotierenden Teils (14) gewindeartig umlaufender Kühlmittelkanal (18) vorgesehen ist, von dem einzelne Leitungen (25) radial zu den jeweiligen Prüfspulen (20) führen, die in ihre definierte Meßposition bei Vorliegen bestimmter Parameter (z.B. Fliehkraft, Druck) verschwenkbar sind.

2. Walzstrasse nach Anspruch 1,
**dadurch gekennzeichnet,**
**daß** das Walzenkühlsystem (6) aus einem den Walzgutaustritt ringförmig umgebenden Kanal (9) besteht, von dem zu den Oberflächen der Walzen (3) im Walzgerüst (2) führende Düsenrohre (12) radial abgehen und der nicht rotierende Teil (13) der Vorrichtung (1) koaxial zu dem ringförmigen Kanal (9) an dessen Gehäuse (8) angeflanscht ist.

3. Walzstrasse nach Anspruch 1 oder 2,
**dadurch gekennzeichnet,**
**daß** die Prüfspulen (20) jeweils auf einem in etwa L-förmigen Träger (30) angeordnet sind, und zwar am Ende des längeren L-Schenkels (31), und der Träger (30) um eine Achse (32) verschwenkbar ist, die im Bereich des Schnittpunkts der Schenkel (31,34) verläuft.

4. Walzstrasse nach Anspruch 3,
**dadurch gekennzeichnet,**
**daß** an einem der L-Schenkel (34) eine Feder (33) angreift, die die Prüfspule (20) bis zur Überschreitung einer bestimmten Rotationsfrequenz in einer vom Walzgut entfernten Stellung hält, wonach die Prüfspule (20) infolge erhöhter Fliehkraft in die Meßposition gelangt.

5. Walzstrasse nach Anspruch 3,
**dadurch gekennzeichnet,**
**daß** zwischen mindestens einer Kühlmittelzuführung (25) zur zugeordneten Prüfspule (20) und dem kürzeren L-Schenkel (34) eines dieser Prüfspule (20) gegenüberliegenden Prüfspulenträgers (30) ein Druckmittelzylinder (36) angeordnet ist, dessen Kolben vom Kühlmittel beaufschlagt mittels seiner Kolbenstange auf den kürzeren L-Schenkel (34) wirkt, sobald der Kühlmitteldruck einen bestimmten Wert überschritten hat, und hierdurch die Prüfspule (20) aus einer vom Walzgut entfernten Stellung in die Meßposition drückt.

6. Walzstrasse nach Anspruch 4 oder 5,
**dadurch gekennzeichnet,**
**daß** Synchronisationselemente für die Verschwenkbewegungen der Prüfspulenträger (30) vorgesehen sind.

7. Walzstrasse nach einem der Ansprüche 1 bis 6,
**gekennzeichnet durch**
ihre Anordnung zwischen dem Walzgutaustritt eines Walzgerüstes (2) und dem Walzguteintritt eines unmittelbar folgenden weiteren Walzgerüstes (4).

## Claims

1. Mill train consisting of at least two roll stands (2, 4) in tandem, in which a device (1) is disposed for non-destructive testing, in particular of hot bar-shaped rolled material in excess of the Curie point during the rolling process, said device consisting of a test coil system with at least two test coils (20), rotating about the passing rolled material, upon which a coolant delivered by a roller cooling system (6) acts, **characterised by** the arrangement of the device (1) consisting of one rotating part (4) and one stationary part (13) immediately behind the rolling stock outlet from one of the roll stands (2) to the roller cooling system (6) assigned hereto and by the fact that the supply of coolant occurs approximately at the level of fixation (7) of the device (1) to the roll stand (2) in the rotating part (14), in which a coolant channel (18) is provided running circumferentially in the manner of a screw up to its front side (23) between the rolled material and a rotation bearing (17) of the rotating part (14), from which individual conduits (25) lead radially to the respective test coils (20) which can be pivoted in their defined measurement position if certain parameters are present (e.g. centrifugal force, pressure).

2. Mill train according to claim 1,
**characterised in that**
the roller cooling system (6) consists of a channel (9) in the form of a ring encircling the rolled material outlet, from which nozzle pipes (12) lead off radially, leading to the surfaces of the rollers (3) in the roll stand (2) and the non-rotating part (13) of the device (1) is flange-mounted coaxially to the ring-shaped channel (9) on the housing (8) thereof.

3. Mill train according to claim 1 or 2,
**characterised in that**
the test coils (20) are each disposed on a roughly L-shaped bearer (30), more specifically at the end of the longer arm of the L (31), and the bearer (30) is rotatable about an axis (32), which runs in the area of the intersection point of the arms (31, 34).

4. Mill train according to claim 3,
**characterised in that**
a spring (33) engages on one of the L-arms (34), and holds the test coil (20) in a position at a distance from the rolled material until the rotation falls below a certain speed, after which the test coil (20), due to increased centrifugal force, adopts the measurement position.

5. Mill train according to claim 3,
**characterised in that**
between at least one coolant feed (25) to the assigned test coil (20) and the shorter arm of the L (34) of a test coil bearer (30) located opposite this test coil (20), a hydraulic cylinder (36) is disposed, whose piston, when acted on by coolant, acts on the shorter L-arm (34) by means of its piston rod as soon as the coolant pressure has exceeded a certain value, and as a result pushes the test coil (20) out of a position at a distance from the rolled material into the measurement position.

6. Mill train according to claim 4 or 5,
**characterised in that**
synchronisation elements are provided for the pivoting movements of the test coil bearer (30).

7. Mill train according to one of claims 1 to 6,
**characterised by**
its arrangement between the rolled material outlet of a roll stand (2) and the rolled material inlet of a further roll stand (4) directly behind it.

## Revendications

1. Train de laminoir constitué d'au moins deux cages de laminoir (2, 4) successives, dans lequel un dispositif (1) pour le contrôle non-destructif d'un matériau laminé en forme de barre, en particulier chaud, est disposé au-dessus du point de Curie pendant le processus de laminage, lequel dispositif est constitué d'un système de bobines de contrôle avec au moins deux bobines de contrôle (20) tournant autour du matériau laminé en circulation et pouvant être soumises à un réfrigérant fourni par un système de refroidissement de cylindres (6), **caractérisé en ce que** le dispositif (1), constitué d'une partie rotative (14) et d'une partie fixe (13), est disposé immédiatement en aval de la sortie du produit laminé de l'une des cages de laminoir (2), sur le système de refroidissement des cylindres (6) associé à ces cages, et **en ce que** l'amenée du réfrigérant pour le système de bobines de contrôle se produit approximativement dans le plan de fixation (7) du dispositif (1) sur la cage de laminoir (2) dans la partie rotative (14), dans laquelle est prévu un canal de réfrigérant (18) tournant à la manière d'un filet jusqu'à sa face frontale (23) entre le matériau à laminer et un palier de rotation (17) de la partie rotative (14), duquel différentes lignes (25) mènent radialement aux bobines de contrôle (20) respectives qui peuvent pivoter dans leur position de mesure définie en présence de paramètres déterminés (par exemple force centrifuge, pression).

2. Train de laminoir selon la revendication 1, **caractérisé en ce que** le système de refroidissement des cylindres (6) est constitué d'un canal (9) entourant en anneau la sortie du produit laminé, duquel partent radialement des tubes à buses (12) menant aux surfaces des cylindres (3) dans la cage de laminoir (2), et la partie non rotative (13) du dispositif (1) est bridée coaxialement au canal (9) de forme annulaire, sur son carter (8).

3. Train de laminoir selon la revendication 1 ou 2, **caractérisé en ce que** les bobines de contrôle (20) sont disposées chacune sur un support (30) approximativement en forme de L, et ce à l'extrémité de la branche la plus longue (31) du L, et le support (30) peut pivoter autour d'un axe (32) qui s'étend dans la zone du point d'intersection des branches (31, 34).

4. Train de laminoir selon la revendication 3, **caractérisé en ce que** sur l'une des branches du L (34) agit un ressort (33) qui maintient la bobine de contrôle (20) jusqu'au dépassement d'une fréquence de rotation déterminée, dans une position éloignée du produit à laminer, après quoi la bobine de contrôle (20) parvient du fait d'une plus grande force centrifuge dans la position de mesure.

5. Train de laminoir selon la revendication 3, **caractérisé en ce qu'**entre au moins une amenée de réfrigérant (25) à la bobine de contrôle (20) associée et la branche la plus courte (34) du L d'un porte-bobine de contrôle (30) opposée à cette bobine de contrôle (20), est disposé un vérin à fluide sous pression (36) dont le piston, sollicité par le réfrigérant, agit au moyen de sa tige de piston sur la branche la plus courte (34) du L, dès que la pression du réfrigérant a dépassé une valeur déterminée, et de ce fait presse la bobine de contrôle (20), d'une position éloignée du produit à laminer, dans la position de mesure.

6. Train de laminoir selon la revendication 4 ou 5, **caractérisé en ce que** sont prévus des éléments de synchronisation pour les mouvements de pivotement des porte-bobines de contrôle (30).

7. Train de laminoir selon l'une des revendications 1 à 6, **caractérisé en ce qu'**il est disposé entre la sortie du produit laminé d'une cage de laminoir (2) et l'entrée du produit à laminer d'une autre cage de laminoir (4) immédiatement suivante.
